# EUROPÄISCHE PATENTSCHRIFT

(11) **EP 2 305 981 B1**
(45) Veröffentlichungstag und Bekanntmachung des Hinweises auf die Patenterteilung: **03.04.2013**
(21) Anmeldenummer: 10172144.7
(22) Anmeldetag: 06.08.2010
(51) Int. Cl.: F02B 37/10, F02C 6/12, F01P 3/12

(54) **Elektrischer Turbolader**
Electrical turbocharger
Turbosoufflante électrique

(30) Priorität: 23.09.2009 DE 102009044921
(43) Veröffentlichungstag der Anmeldung: 06.04.2011
(73) Patentinhaber: Robert Bosch GmbH, 70442 Stuttgart (DE)
(72) Erfinder: Fleig, Claus, 77955 Ettenheim (DE)

(56) Entgegenhaltungen:
- EP-A2- 1 752 636
- WO-A1-02/50408
- WO-A2-2006/131470
- DE-A1-102005 057 308
- US-A1- 2004 005 228

## Beschreibung

Die Erfindung betrifft einen elektrischen Turbolader mit mindestens einem Bauteil, dem eine Kühleinrichtung zugeordnet ist. Ferner betrifft die Erfindung eine Verwendung einer Kühlplatte zum Kühlen einer Einrichtung.

### Stand der Technik

Elektrische Turbolader der eingangs genannten Art sind aus dem Stand der Technik bekannt. Der elektrische Turbolader besteht aus einem Elektromotor, einem Verdichter, einer Leistungselektronikeinrichtung und optional einer Turbine. Der Elektromotor weist einen Stator sowie einen Rotor mit einer Welle auf. Der Verdichter weist ein Verdichterrad auf und die Turbine ein Turbinenrad. Die Leistungselektronikeinrichtung ist mit dem Elektromotor elektrisch verbunden und versorgt diesen je nach Betriebssituation mit elektrischer Energie. Bei einem Betrieb des elektrischen Turboladers wandelt der Elektromotor die elektrische Energie in eine mechanische Rotationsbewegung um, wobei sich der Rotor mit der Welle in dem Stator dreht. Die Welle überträgt die Rotationsbewegung auf das Verdichterrad, wobei axial in das Verdichterrad einströmende Luft radial verdichtet ausströmt. Optional strömt radial Abgas einer Brennkraftmaschine in das Turbinenrad, wodurch eine Rotationsbewegung des Turbinenrads entsteht, die auf die Welle übertragen wird. Somit ist zumindest zeitweise zusätzlich oder alternativ zu dem Elektromotor ein Antrieb der Welle und somit des Verdichters mittels der Turbine möglich. Die in dem elektrischen Turbolader verdichtete Luft ist insbesondere für einen eine Brennstoffzelle aufweisenden Motor vorgesehen, wobei Sauerstoff in der verdichteten Luft einem Betrieb der Brennstoffzelle dient. Alternativ dient die in dem elektrischen Turbolader verdichtete Luft in einem die Brennkraftmaschine aufweisenden Fahrzeug einer Ladedruckerhöhung in der Brennkraftmaschine. Bei dem Betrieb des elektrischen Turboladers entsteht Wärme, somit muss dieser gekühlt werden. Für eine Verteilung eines Kühlmediums in dem elektrischen Turbolader mittels eines Kühlkanals sind insbesondere mehrere Bohrungen in einem Gehäuse des elektrischen Turboladers vorgesehen. Da die Bohrungen geradlinig sind, müssen zur Realisierung eines Winkels in dem Kühlkanal mindestens zwei sich kreuzende Bohrungen eingesetzt werden. Durch die sich kreuzenden Bohrungen entstehen Toträume, in denen Kühlmedium im Wesentlichen unbewegt steht, des Weiteren ergeben sich eckige Verläufe des Kühlkanals. Somit resultieren Strömungsverluste des Kühlmediums, die eine erhöhte Leistungsaufnahme einer mit dem Kühlkanal fluidtechnisch verbundenen Kühlmediumspumpe zur Folge haben. Ein weiterer Nachteil ist ein hoher Fertigungsauffwand für die benötigte große Anzahl der Bohrungen sowie ein hoher Aufwand für eine Entgratung der Bohrungen.

WO 02/50408 zeigt eine alternative Anordnung von Kühlkanälen.

### Offenbarung der Erfindung

Demgegenüber weist der elektrische Turbolader mit den in Anspruch 1 genannten Merkmalen den Vorteil auf, dass eine einfache und flexible Fertigung einer Kühleinrichtung möglich ist, da eine Kühlplatte mit mehreren rinnenartig offenen Kühlkanälen für ein Kühlmedium zumindest als ein Teil der Kühleinrichtung vorgesehen ist. Bevorzugt ist die Kühlplatte mit dem Kühlkanal in einem Druckgussverfahren gefertigt, alternativ ist der Kühlkanal mittels Fräsen oder Ätzen in die Kühlplatte eingebracht. Vorteilhafterweise ist der Kühlkanal zumindest abschnittsweise mäanderförmig ausgebildet, wodurch eine optimale Strömung des Kühlmediums in dem Kühlkanal möglich ist und dadurch eine Reduzierung der Leistungsaufnahme der Kühlmediumspumpe resultiert. Die Erfindung sieht vor, dass durch Anlage der Kühlplatte an den Bauteilen des elektrischen Turboladers der offene Kühlkanälen geschlossen sind. Dadurch ist bei dem Betrieb des elektrischen Turboladers ein direkter Kontakt des Kühlmediums mit dem Bauteil des elektrischen Turboladers gegeben. Insbesondere ist der Kühlkanal mit Hilfe eines Bauteils geschlossen. Alternativ wäre es denkbar, dass mehrere Kühlkanäle mittels eines Bauteils oder mittels mehrerer Bauteile geschlossen sind. Somit wird mittels der Kühlplatte durch Kontakt mehreren ein Bauteilen des Turboladers gekühlt. Der offene Kühlkanal der Kühlplatte ist durch deren Anlage an dem Bauteil senkrecht zu einem Querschnitt des Kühlkanals geschlossen. An seinen zwei Enden weist der Kühlkanal insbesondere parallel zu seinem Querschnitt einen Kühlmediumszulauf und einen Kühlmediumsablauf auf. Bei dem Betrieb des elektrischen Turboladers strömt das Kühlmedium in den Kühlmediumszulauf ein, fließt durch den Kühlkanal und strömt aus dem Kühlmediumsablauf aus. Die Kühlplatte besteht insbesondere aus einem Material mit einer guten Wärmeleitfähigkeit, bevorzugt aus Kupfer, oder alternativ aus Silber, Gold oder Aluminium oder aus einer Kupfer, Silber, Gold und/oder Aluminium aufweisenden Metalllegierung. Das Kühlmedium ist insbesondere Wasser, alternativ kann eine wässrige Lösung, Öl, Luft oder ein weiteres flüssiges oder gasförmiges Kühlmedium vorgesehen sein. Die Kühlplatte und das Bauteil sind insbesondere mittels Verschrauben aneinander befestigt. Alternativ können die Kühlplatte und das Bauteil mittels Verlöten, Verkleben oder Verklammern aneinander befestigt sein. Vorzugsweise liegt jeweils eine Dichtung in parallel zum Kühlkanal verlaufenden Nuten ein, die auf beiden Seiten des Kühlkanals ausgebildet sind. Alternativ kann eine Dichtmasse zwischen der Kühlplatte und dem Bauteil vorgesehen sein.

Eine Weiterbildung der Erfindung sieht vor, dass das Bauteil eine Leistungselektronikeinrichtung, ein Elektromotor, ein Verdichter und/oder eine Turbine ist. Das Bauteil weist ein Teilgehäuse des Gehäuses des elektrischen Turboladers auf. Durch die Anlage der Kühlplatte an dem Bauteil wird das Teilgehäuse durch den Kontakt mit dem Kühlmedium und der mittels des Kühlmediums abgekühlten Kühlplatte effektiv gekühlt.

Ferner ist es vorgesehen, dass eine oder mehrere Seiten der Kühlplatte an dem mindestens einen Bauteil anliegen. Insbesondere liegt jeweils eine Seite der Kühlplatte an jeweils einem Bauteil an. Alternativ ist es möglich, dass eine Seite der Kühlplatte an mehreren Bauteilen anliegt, oder dass mehrere Seiten der Kühlplatte an einem zumindest abschnittsweise L- oder U-förmigen Bauteil anliegen.

In einer bevorzugten Weiterbildung ist es vorgesehen, dass die Kühlplatte jeweils anliegend zwischen der Leistungselektronikeinrichtung und dem Elektromotor angeordnet ist. Dabei sind insbesondere die Leistungselektronikeinrichtung und der Elektromotor jeweils als Bauteil vorgesehen, das mindestens einen offenen Kühlkanal schließt.

Eine Weiterbildung der Erfindung sieht vor, dass die Kühlplatte als separates Bauelement oder einstückig mit der Leistungselektronikeinrichtung und/oder mit dem Elektromotor ausgebildet ist. Insbesondere ist die Kühlplatte als separates Bauelement ausgebildet, da bei einer derartigen Ausbildung bei der Fertigung auf alle Seiten der Kühlplatte ein einfacher Zugriff möglich ist, was vor allem die Fertigung des Kühlkanals vereinfacht. Bei der alternativen einstückigen Ausbildung ist die Kühlplatte einstückig mit zumindest einem Abschnitt des Teilgehäuses der Leistungselektronikeinrichtung und/oder mit zumindest einem Abschnitt des Teilgehäuses des Elektromotors ausgebildet. Somit kann bei der Fertigung der Kühlplatte vor einem Zusammenbau des elektrischen Turboladers auch auf eine innere Teilgehäuseseite der Leistungselektronikeinrichtung und/oder des Elektromotors zugegriffen werden, was vor allem die Fertigung des Kühlkanals erleichtert.

Ferner ist es vorgesehen, dass die Kühlplatte mindestens einen Verbindungskanal aufweist, der in den Kühlkanal mündet. Der Verbindungskanal ist insbesondere geschlossen und weist bevorzugterweise einen kreisförmigen Querschnitt auf. Alternativ kann der Verbindungskanal rinnenförmig ausgebildet sein, wobei er insbesondere den Kühlkanal mit einem weiteren Kühlkanal verbindet.

Eine Weiterbildung der Erfindung sieht vor, dass der Verbindungskanal ein die Kühlplatte durchsetzender Verbindungskanal ist. Insbesondere verbindet der Verbindungskanal diejenigen gegenüberliegenden Seiten der Kühlplatte, die die größte Oberfläche aufweisen. Alternativ kann der Verbindungskanal eine dieser Seiten mit einer dazu senkrecht angeordneten Seite der Kühlplatte verbinden. Prinzipiell ist die Verbindung aller möglichen Seitenkombinationen der Kühlplatte möglich. Des Weiteren ist es möglich, dass der Verbindungskanal einen weiteren Verbindungskanal kreuzt und somit ein Netz von Verbindungskanälen entsteht.

Bevorzugt ist es vorgesehen, dass der Verbindungskanal eine die Kühlplatte durchsetzende Bohrung ist. Die Bohrung verläuft dabei insbesondere geradlinig und weist einen kreisförmigen Querschnitt auf. Ein derart ausgebildeter Verbindungskanal ist besonders einfach zu fertigen.

Eine Weiterbildung der Erfindung sieht vor, dass der elektrische Turbolader mindestens einen Anschlusskanal aufweist, der mit dem Kühlkanal und/oder dem Verbindungskanal durch die Anlage der Kühlplatte an dem Bauteil kommunizierend in Verbindung steht und zu mindestens einer Kühlstelle des elektrischen Turboladers führt. Kommunizierend heißt dabei, dass die Strömung von Kühlmedium von dem Verbindungskanal in den Anschlusskanal oder von dem Anschlusskanal in den Verbindungskanal vorgesehen ist. Das Bauteil weist dabei den Anschlusskanal zumindest teilweise auf. Weist das Bauteil den Anschlusskanal vollständig auf, so befindet sich die Kühlstelle in dem Bauteil. Weist das Bauteil den Anschlusskanal nur teilweise auf, so befindet sich die Kühlstelle in oder an einem weiteren Bauelement des elektrischen Turboladers. Ein Vorteil des Verbindungskanals und des Anschlusskanals ist es, dass es zusätzlich zu der Kühlung mittels des Kontakts der Kühlplatte mit dem Bauteil möglich ist, ein nicht mit der Kühlplatte in Kontakt stehendes Bauelement des elektrischen Turboladers mit Hilfe der Kühlplatte zu kühlen. Bei Anlage der Kühlplatte an dem Bauteil fluchtet das anliegende Ende des Anschlusskanals mit dem anliegenden Ende des Verbindungskanals und/oder das anliegende Ende des Anschlusskanals liegt auf dem Kühlkanal auf. Insbesondere ist um das anliegende Ende des Anschlusskanals und/oder um das anliegende Ende des Verbindungskanals eine ringförmige Nut vorgesehen, in der eine ringförmige Dichtung, bevorzugt eine Gummidichtung, einliegt.

Eine Weiterbildung der Erfindung sieht vor, dass die Kühlstelle ein Element der Leistungselektronikeinrichtung, des Elektromotors, des Verdichters und/oder der Turbine ist. Das Element der Leistungselektronikeinrichtung ist insbesondere ein Element, in dem bei dem Betrieb des elektrischen Turboladers viel Wärme entsteht und/oder das leicht durch Überhitzung beschädigbar ist. Das Element des Elektromotors ist insbesondere der Stator und/oder mindestens ein Lager der Welle, das Element des Verdichters insbesondere das Teilgehäuse des Verdichters und das Element der Turbine insbesondere das Teilgehäuse der Turbine.

Bevorzugt ist es, dass der Anschlusskanal zumindest abschnittsweise als Kühlspiralkanal und/oder als Kühlraum ausgebildet ist. Der Kühlspiralkanal weist insbesondere einen kreisförmigen oder einen rechteckigen Querschnitt auf. Bevorzugterweise ist der Kühlspiralkanal durch ein Zusammenwirken zweier Bauelemente des elektrischen Turboladers ausgebildet, indem eine Rinne, die an einem Bauelement ausgebildet ist, durch eine Rinne oder durch eine glatte Fläche eines weiteren Bauelements abgedeckt wird. Dadurch ist eine einfache Fertigung des Kühlspiralkanals möglich. Insbesondere verläuft der Kühlspiralkanal spiralförmig, beispielsweise um den Stator des Elektromotors. Alternativ kann der Kühlspiralkanal auch zumindest abschnittsweise mäanderförmig in einer Ebene verlaufen, beispielsweise in dem Teilgehäuse der Leistungselektronikeinrichtung. Der Kühlraum ist ein Raum in dem elektrischen Turbolader, der prinzipiell jede beliebige Form annehmen kann. Insbesondere verläuft der Kühlraum zylinderförmig um die Welle des Elektromotors, wobei der Kühlraum bevorzugt für die Kühlung des Lagers der Welle vorgesehen ist.

Vorzugsweise ist es vorgesehen, dass ein Kühlmediumszulauf auf einer Seite der Kühlplatte und ein Kühlmediumsablauf einer anderen oder auf derselben Seite der Kühlplatte ausgebildet ist. Insbesondere ist der Kühlmediumsablauf auf der anderen Seite der Kühlplatte ausgebildet, wofür bevorzugterweise der Verbindungskanal die beiden Seiten verbindet. Bei einer derartigen Ausbildung besitzt im Betrieb des elektrischen Turboladers das Kühlmedium auf der einen Seite der Kühlplatte eine geringere Temperatur als auf der anderen Seite, da sich das Kühlmedium während des Strömens durch den Kühlkanal erwärmt. Somit ergibt sich der Vorteil, dass mittels Anlage der einen Seite an dem Bauteil eine effektive Kühlung des Bauteils möglich ist.

Die Erfindung betrifft weiterhin eine Verwendung einer Kühlplatte zum Kühlen einer Einrichtung, wobei die Kühlplatte mindestens einen rinnenartig offenen Kühlkanal für ein Kühlmedium aufweist und durch Anlegen der Kühlplatte an mindestens ein Bauteil der Einrichtung der offene Kühlkanal geschlossen wird. Die Erfindung sieht vor, dass als Einrichtung ein elektrischer Turbolader verwendet wird. Somit wird durch Anlegen der Kühlplatte das mindestens eine Bauteil des elektrischen Turboladers mittels Kühlmedium gekühlt. Die Kühlung wird dabei sowohl mittels Kontakt mit dem Kühlmedium, das durch die Kühlplatte strömt, als auch mittels Kontakt mit der von dem Kühlmedium gekühlten Kühlplatte realisiert. Der Kühlkanal verläuft bevorzugt zumindest abschnittsweise mäanderförmig. Als Kühlmedium wird insbesondere Wasser verwendet, alternativ kann eine wässrige Lösung, Öl, Luft oder ein anderes flüssiges oder gasförmiges Kühlmedium verwendet werden.

Eine Weiterbildung der Erfindung sieht vor, dass der elektrische Turbolader als Bauteil eine Leistungselektronikeinrichtung, einen Elektromotor, einen Verdichter und/oder eine Turbine aufweist, wobei an mindestens einem der Bauteile die Kühlplatte anliegt. Insbesondere ist die Kühlplatte zwischen der Leistungselektronikeinrichtung und dem Elektromotor jeweils anliegend angeordnet, wobei diese beide Bauteile durch Kontakt kühlt.

Die Erfindung wird im Folgenden anhand der in der Zeichnung dargestellten Ausführungsbeispiele näher erläutert, ohne dass eine Beschränkung der Erfindung erfolgt. Es zeigen:
Figur 1 eine schematische Schnittdarstellung eines elektrischen Turboladers, der eine Kühlplatte (in einer Ausführungsform) aufweist,
Figur 2 eine Seite der Kühlplatte (in einer weiteren Ausführungsform) in Draufsicht,
Figur 3 eine andere Seite der Kühlplatte in Draufsicht,
Figur 4 die Kühlplatte in einer isometrischen Ansicht, und
Figur 5 die Kühlplatte in einer anderen isometrischen Ansicht.

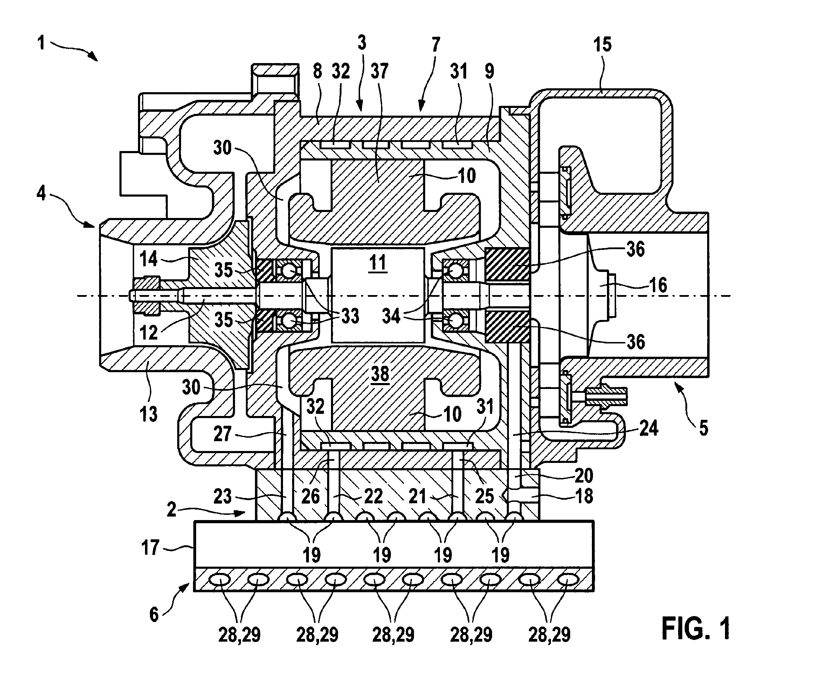

Die Figur 1 zeigt einen elektrischen Turbolader 1, der eine Ausführungsform einer Kühlplatte 2, einen Elektromotor 3, einen Verdichter 4, eine Turbine 5 und eine Leistungselektronikeinrichtung 6 aufweist. Der Elektromotor 3 weist ein Teilgehäuse 7 auf, das aus einem Außenteilgehäuse 8 und einem Innenteilgehäuse 9 besteht. In dem Teilgehäuse 7 ist ein Stator 10 angeordnet sowie ein Rotor 11 mit einer Welle 12. Der Verdichter 4 weist ein Teilgehäuse 13 sowie ein Verdichterrad 14 auf und die Turbine 5 ein Teilgehäuse 15 sowie ein Turbinenrad 16. In einem Teilgehäuse 17 der Leistungselektronikeinrichtung 6 sind hier nicht dargestellte Elemente der Leistungselektronikeinrichtung angeordnet.

Die Kühlplatte 2 weist einen Kühlmediumszulauf 18, einen Kühlkanal 19, Verbindungskanäle 20 bis 23 und einen hier nicht dargestellten Kühlmediumsablauf auf. In dem Teilgehäuse 7 des Elektromotors 3 sind Anschlusskanäle 24 bis 27 ausgebildet. Dabei fluchten die Öffnungen der Anschlusskanäle 24 bis 27 auf der der Kühlplatte 2 zugewandten Seite des Elektromotors 3 mit den Öffnungen der anliegenden Verbindungskanäle 20 bis 23. Die Verbindungskanäle 20 bis 23 sind als geradlinige Bohrungen ausgebildet. Der Kühlmediumszulauf 18 ist ebenfalls als geradlinige Bohrung ausgebildet, die den Verbindungskanal 20 kreuzt. Ein hier nicht vollständig dargestellter Anschlusskanal 28 führt von dem Kühlkanal 19 zu einem Element in der Leistungselektronikeinrichtung 6. Bevorzugt an dem Element anliegend ist der Anschlusskanal 28 als Kühlspiralkanal 29 ausgebildet. Insbesondere verläuft der Kühlspiralkanal 29 mäanderförmig. Der Anschlusskanal 27 ist abschnittsweise als Kühlraum 30 ausgebildet, wobei der Kühlraum 30 insbesondere zylindersymmetrisch um ein Lager 33 der Welle 12 in dem Teilgehäuse 7 des Elektromotors 3 verläuft. Der Anschlusskanal 24 verläuft ebenfalls in dem Teilgehäuse 7 des Elektromotors 3, wobei dieser bevorzugt abschnittsweise als ein hier nicht dargestellter, zylindersymmetrisch um ein Lager 34 der Welle 12 verlaufender Kühlraum ausgebildet ist. Die Anschlusskanäle 25 und 26 sind abschnittsweise als Kühlspiralkanäle 31 und 32 ausgebildet, wobei die Kühlspiralkanäle 31 und 32 bevorzugt fluidtechnisch miteinander verbunden sind. Die Kühlspiralkanäle 31 und 32 verlaufen insbesondere ringförmig um den Stator 10 in dem Teilgehäuse 7 des Elektromotors 3, wobei die Ringe der Kühlspiralkanäle 31 und 32 bevorzugt untereinander verbunden sind. Eine bevorzugte Alternative ist es, dass die Kühlspiralkanäle 31 und 32 jeweils spiralförmig um den Stator 10 verlaufen (hier nicht dargestellt).

Das Teilgehäuse 7 des Elektromotors 3 besteht aus dem Außenteilgehäuse 8 und dem Innenteilgehäuse 9, die beide topfförmig ausgebildet sind. An diesen sind die Kühlspiralkanäle 31 und 32 ausgebildet. Dabei ist jeweils eine Seite der Kühlspiralkanäle 31 und 32 als mindestens eine rechteckige rinnenartige Vertiefung an einer Außenfläche des Innenteilgehäuses 9 ausgebildet. Diese rinnenartigen Vertiefungen werden bei einem Einstecken des topfförmigen Innenteilgehäuses 9 in das ebenfalls topfförmige Außengehäuse 8 mit einer glatten Innenseite des Außenteilgehäuses 8 verschlossen. Der Stator 10 weist Wickelköpfe 37 und 38 auf, um die hier nicht dargestellte Spulenwicklungen angeordnet sind. Die Welle 12 ist in dem Lager 33 sowie in dem Lager 34 drehbar gelagert. Insbesondere handelt es sich bei dem Lager 33 und dem Lager 34 jeweils um ein Kugellager. Eine Dichtung 35 dichtet den Elektromotor 3 gegen den Verdichter 4 ab, eine Dichtung 36 dichtet den Elektromotor 3 gegen die Turbine 5 ab.

Bei einem Betrieb des elektrischen Turboladers 1 wird der Elektromotor 3 von der Leistungselektronikeinrichtung 6 mit elektrischer Energie versorgt, wodurch mechanische Energie in Form einer Rotation des Rotors 11 und somit einer Rotation der Welle 12 erzeugt wird. In dem Verdichter 4 wird mittels der Welle 12 das Verdichterrad 14 angetrieben und axial in den Verdichter 4 einströmende Luft radial verdichtet, die in einem hier nicht dargestellten Fahrzeug verwendet wird. Zusätzlich oder alternativ zur Erzeugung der Rotation mittels des Elektromotors 3 kann die Rotation mittels der Turbine 5 erzeugt werden. Hierzu strömt ein Abgas in radialer Richtung in das Turbinenrad 16, das die Welle 12 in Rotation versetzt. Bei dem Betrieb des elektrischen Turboladers 1 entsteht Wärme: Insbesondere in dem Stator 10 entsteht Wärme durch elektrischen Strom, in den Lagern 33 und 34 der Welle 12 entsteht Wärme durch Reibung und in den Elementen der Leistungselektronikeinrichtung 6 entsteht bei ihrem Betrieb ebenfalls Wärme.

Für eine Kühlung während des Betriebs des elektrischen Turboladers 1 strömt ein Kühlmedium in den Kühlmediumszulauf 18 der Kühlplatte 2 ein, wobei Kühlmedium zum einen in den Verbindungskanal 20, anschließend in den Anschlusskanal 24 und nachfolgend für eine Kühlung des Lagers 34 in einen hier nicht dargestellten Kühlraum, den der Anschlusskanal 24 ausbildet, strömt. Zum anderen strömt Kühlmedium in den Kühlkanal 19, den es insbesondere in einem mäanderförmigen Verlauf (hier nicht näher gezeigt) durchströmt. Vom Kühlkanal 19 strömt des Weiteren Kühlmedium in den Verbindungskanal 21, anschließend in den Anschlusskanal 25 und somit ringförmig durch den Kühlspiralkanal 31 um den Stator 10, wodurch dieser gekühlt wird. Ebenfalls strömt Kühlmedium durch den Kühlkanal 19 in den Verbindungskanal 22, anschließend in den Anschlusskanal 26 und somit ebenfalls ringförmig durch den Kühlspiralkanal 32 um den Stator 10. Durch den Kühlkanal 19 strömt des Weiteren Kühlmedium in den Verbindungskanal 23 und anschließend in den Anschlusskanal 27, der abschnittsweise als Kühlraum 30 ausgebildet ist, wobei bei einem Durchströmen des Kühlraums 30 sowohl das Lager 33 als auch zumindest die Wickelköpfe 37 und 38 des Stators 10 gekühlt werden. Hier nicht dargesstellt sind weitere Anschlusskanäle, durch die das Kühlmedium, das durch die Anschlusskanäle 24 bis 27 in das Teilgehäuse 7 des Elektromotors 3 strömt, zur Kühlplatte 2 rückgeführt wird. Ein weiterer hier nicht dargestellter Kühlkanal ist vorgesehen, in den die Anschlusskanäle das Kühlmedium rückführen, wobei der Kühlkanal an einer Anlagefläche zwischen der Kühlplatte 2 und dem Elektromotor 3 ausgebildet ist und an seinem Ende einen hier nicht dargestellten Kühlmediumsablauf aufweist. Des Weiteren strömt Kühlmedium von dem Kühlkanal 19 durch einen hier nicht vollständig dargestellten Anschlusskanal 28 zu einem Element der Leistungselektronikeinrichtung 6, wo es durch den Kühlspiralkanal 29 strömt. Zusätzlich kann es vorgesehen sein, dass das Teilgehäuse 13 des Verdichters 4 gekühlt wird und/oder das Teilgehäuse 15 der Turbine 5 gekühlt wird (hier nicht dargestellt).

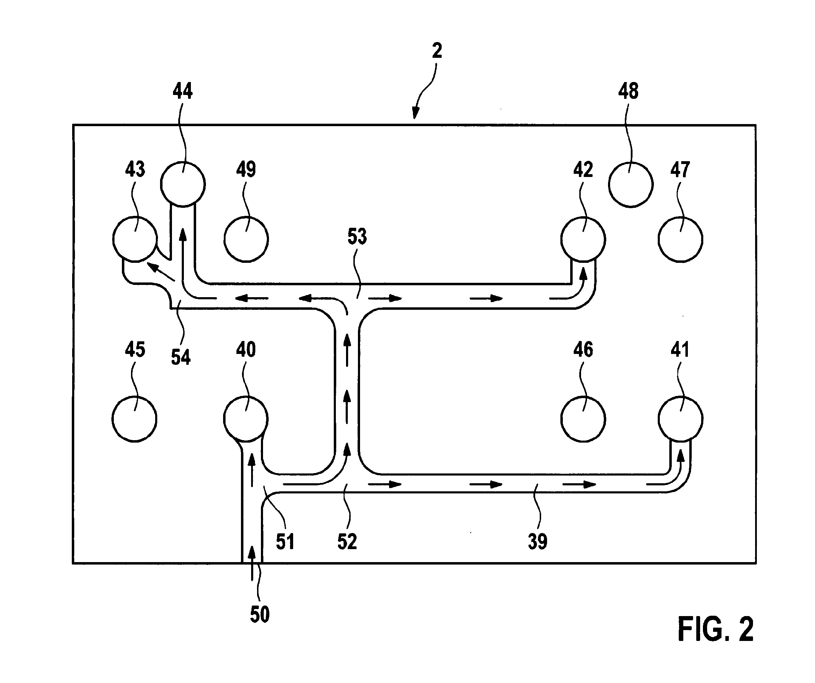

Die Figur 2 zeigt eine Draufsicht einer weiteren Ausführungsform der Kühlplatte 2. Bei einer Montageposition gemäß Figur 1 ist die in der Figur 2 gezeigte Seite der Kühlplatte 2 insbesondere die an dem Elektromotor 3 anliegende Seite. In der Figur 2 weist die Kühlplatte 2 einen Kühlkanal 39 auf, der rinnenartig offen ist. Es sind fünf Verbindungskanäle 40 bis 44 vorhanden, die in den Kühlkanal 39 münden und die Kühlplatte 2 durchsetzen. Des Weiteren weist die Kühlplatte 2 fünf Verbindungskanäle 45 bis 49 auf, die die Kühlplatte 2 ebenfalls durchsetzen und separat zu dem Kühlkanal 39 vorliegen. Die Verbindungskanäle 40 bis 49 sind als geradlinige Bohrungen ausgebildet.

Bei dem Betrieb des elektrischen Turboladers 1 strömt das Kühlmedium in Pfeilrichtung in einen Kühlmediumszulauf 50 ein. Im Folgenden zeigen Pfeile die Strömungsrichtung des Kühlmediums. An einer Verzweigungsstelle 51 strömt ein Teil des Kühlmediums in den Verbindungskanal 40, der insbesondere in der Montageposition durch Anlage der Kühlplatte an dem Elektromotor 3 mit einem Anschlusskanal in Verbindung steht, der bevorzugt zu dem Stator 10 führt. Ein weiterer Teil des Kühlmediums fließt von der Verzweigungsstelle 51 bis zu einer Verzweigungsstelle 52. Von dort fließt ein Teil des Kühlmediums zu dem Verbindungskanal 41, der insbesondere in der Montageposition mit einem Anschlusskanal in Verbindung steht, der zu dem Lager 34 oder 33 der Welle 12 führt. Ein Teil des Kühlmediums fließt von einer Verzweigungsstelle 52 zu der Verzweigungsstelle 53. Von dort fließt ein Teil des Kühlmediums zu dem Verbindungskanal 42, wobei in der Montageposition der Verbindungskanal 42 bevorzugt mit einem Anschlusskanal in Verbindung steht, der zu dem Stator 10 führt. Ein weiterer Teil des Kühlmediums strömt von der Verzweigungsstelle 53 zu einer Verzweigungsstelle 54. Von der Verzweigungsstelle 54 fließt ein Teil des Kühlmediums zu dem Verbindungskanal 43, der in der Montageposition insbesondere mit einem Anschlusskanal in Verbindung steht, der zum Lager 33 oder 34 der Welle 12 führt. Ein weiterer Teil des Kühlmediums strömt von der Verzweigungsstelle 54 zu dem Verbindungskanal 44 und anschließend durch die Kühlplatte 2 auf die gegenüberliegende Seite der Kühlplatte 2. Nach einem Kühlen insbesondere des Stators 10 strömt das Kühlmedium durch die Verbindungskanäle 46 und 49 durch die Kühlplatte 2 auf die gegenüberliegende Seite der Kühlplatte 2, nach einem Kühlen insbesondere des Lagers 33 oder 34 strömt das Kühlmedium durch den Verbindungskanal 45 und nach einem Kühlen insbesondere des Lagers 34 oder 33 durch den Verbindungskanal 47 auf die gegenüberliegende Seite der Kühlplatte 2. Der Verbindungskanal 48 wird in der Montageposition insbesondere von dem Teilgehäuse 7 des Elektromotors 3 auf der in der Figur 2 gezeigten Seite geschlossen.

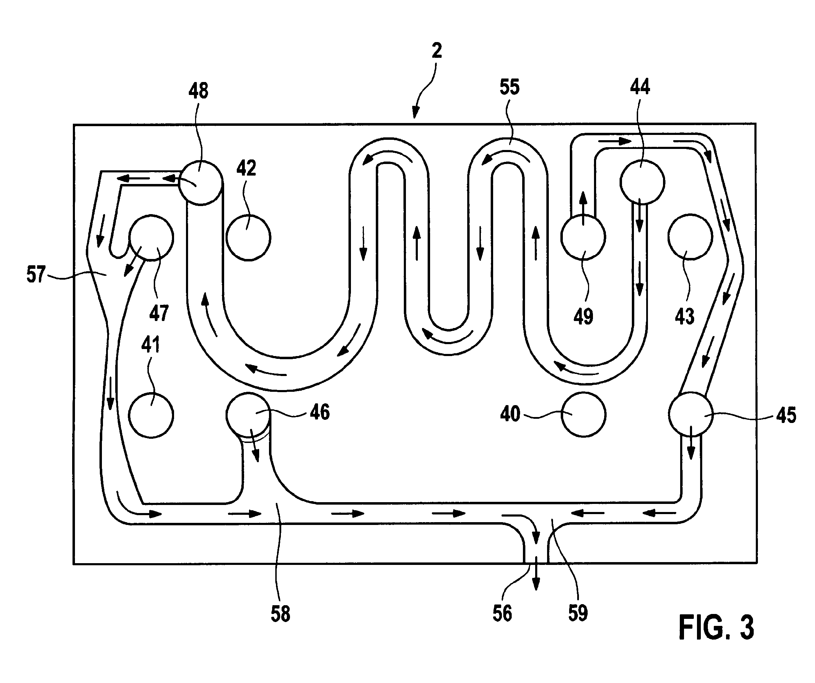

Die Figur 3 zeigt eine Draufsicht der zu der in der Figur 2 gegenüberliegenden Seite der Kühlplatte 2 in der gleichen Ausführungsform wie in der Figur 2. Die in der Figur 3 gezeigte Seite der Kühlplatte 2 weist zusätzlich zu den Verbindungskanälen 40 bis 49 einen rinnenförmig ausgebildeten Kühlkanal 55 sowie einen Kühlmediumsablauf 56 auf.

Bei dem Betrieb des elektrischen Turboladers 1 strömt das Kühlmedium von der in der Figur 2 gezeigten Seite der Kühlplatte 2 durch den Verbindungskanal 44 auf die in der Figur 3 gezeigte Seite der Kühlplatte 2. In der Montageposition gemäß Figur 1 ist insbesondere durch Anlage der Kühlplatte 2 an der Leistungselektronikeinrichtung 6 der Verbindungskanal 44 mit dem Anschlusskanal 28 verbunden, der in die Leistungselektronikeinrichtung 6 führt. Ein Teil des Kühlmediums strömt durch den Anschlusskanal 28 und ein anderer Teil des Kühlmediums strömt durch den Kühlkanal 55. Kühlmedium strömt abschnittsweise mäanderförmig durch den Kühlkanal 55 und kühlt somit durch Anlage der Kühlplatte 2 an insbesondere der Leistungselektronikeinrichtung 6 diese durch Kontakt. Der Verbindungskanal 48 steht in der Montageposition insbesondere fluidtechnisch in Verbindung mit dem Anschlusskanal 28. Somit strömt aus dem Verbindungskanal 48 Kühlmedium, insbesondere aus der Leistungselektronikeinrichtung 6, in den Kühlkanal 55. Von dem Verbindungskanal 48 strömt Kühlmedium zu einer Verzweigungsstelle 57, an der zusätzliches Kühlmedium aus dem Verbindungskanal 47, in der Montageposition insbesondere von dem Lager 34 oder 33 kommend, in den Kühlkanal 55 strömt. An einer Verzweigungsstelle 58 strömt zusätzliches Kühlmedium aus dem Verbindungskanal 46, in der Montageposition insbesondere von dem Stator 10 kommend, in den Kühlkanal 55. Von der Verzweigungsstelle 58 strömt das Kühlmedium zu einer Verzweigungsstelle 59 und von dort aus zu dem Kühlmediumsablauf 56, aus dem es aus der Kühlplatte austritt. Durch den Verbindungskanal 49 strömt Kühlmedium, in der Montageposition insbesondere von dem Stator 10 kommend, in den Kühlkanal 55, durch den Verbindungskanal 45 strömt zusätzliches Kühlmedium, in der Montageposition insbesondere von dem Lager 33 oder 34 kommend, in den Kühlkanal 55 und an der Verzweigungsstelle 59 strömt Kühlmedium in den Kühlmediumsablauf 56 und tritt nachfolgend aus der Kühlplatte 2 aus.

Die Öffnungen der Verbindungskanäle 40 bis 43 auf der in Figur 3 gezeigten Seite der Kühlplatte 2 sind in der Montageposition insbesondere durch Anlage der Kühlplatte 2 an der Leistungselektronikeinrichtung 6 geschlossen.

Eine gerichtete Strömung in den Verbindungskanälen 40 bis 49 und in den hier nicht gezeigten Anschlusskanälen ist möglich, da auf der in der Figur 2 gezeigten Seite der Kühlplatte der Druck des Kühlmediums, das bevorzugt Wasser ist, größer ist als auf der in Figur 3 gezeigten Seite der Kühlplatte 2.

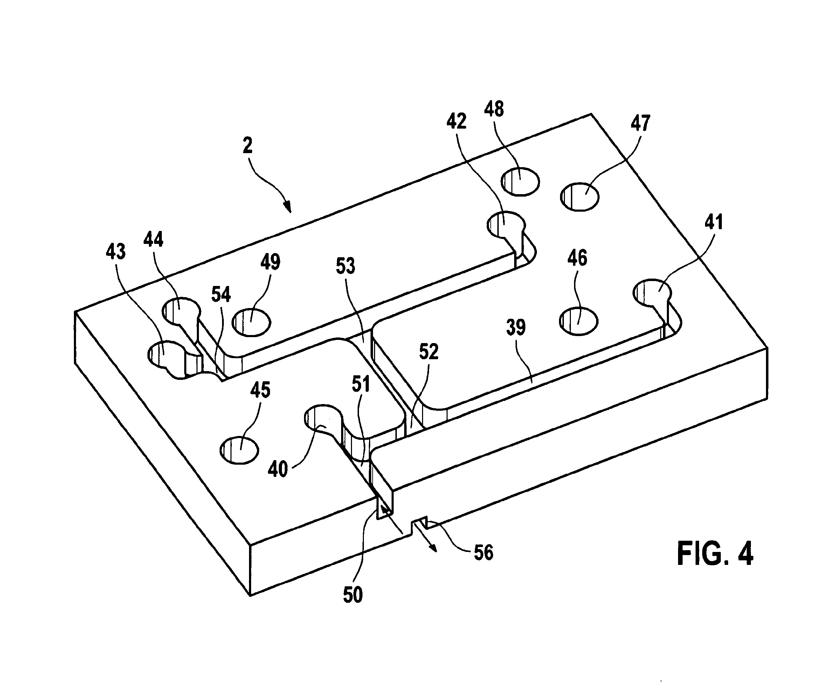

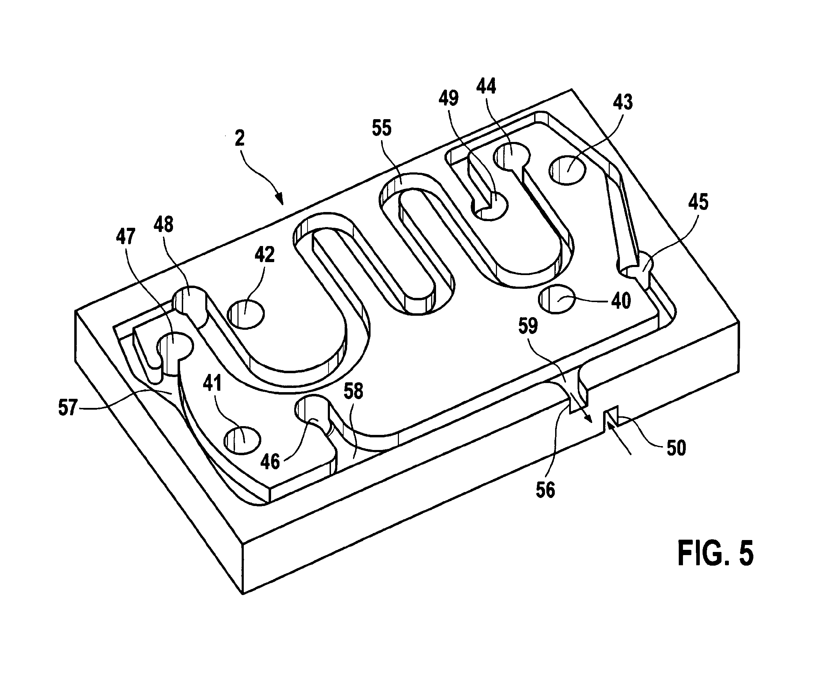

In den Figuren 4 und 5 ist die Ausführungsform der Kühlplatte 2 der Figuren 2 und 3 gezeigt. Die isometrischen Darstellungen in den Figuren 4 und 5 dienen dabei dem leichteren Verständnis des Aufbaus der Kühlplatte 2.

## Patentansprüche

1. Elektrischer Turbolader (1) mit mehreren Bauteilen (3,6), dem eine Kühleinrichtung zugeordnet ist, wobei als Bauteile (3,6) eine Leistungselektronik (6) sowie ein Elektromotor (3) vorgesehen sind **dadurch gekennzeichnet dass** die Kühleinrichtung eine jeweils anliegend zwischen der Leistungselektronikeinrichtung (6) und dem Elektromotor (3) angeordnete Kühlplatte (2) aufweist, die auf gegenüberliegenden Seiten rinnenartig offene Kühlkanäle (19,39,55) für ein Kühlmedium besitzt, wobei durch Anlage der Kühlplatte (2) an die Leistungselektronikeinrichtung (6) und den Elektromotor (3) jeweils mindestens einer der offenen Kühlkanäle (19,39,55) geschlossen ist.

2. Elektrischer Turbolader nach Anspruch 1, **dadurch gekennzeichnet, dass** die Kühlplatte (2) mindestens einen Verbindungskanal (20 bis 23, 40 bis 49) aufweist, der in den Kühlkanal (19,39,55) mündet.

3. Elektrischer Turbolader nach einem der vorhergehenden Ansprüche, **dadurch gekennzeichnet, dass** der Verbindungskanal (20 bis 23, 40 bis 49) ein die Kühlplatte (2) durchsetzender Verbindungskanal (20 bis 23, 40 bis 49) ist.

4. Elektrischer Turbolader nach einem der vorhergehenden Ansprüche, **dadurch gekennzeichnet, dass** der Verbindungskanal (20 bis 23, 40 bis 49) eine die Kühlplatte (2) durchsetzende Bohrung ist.

5. Elektrischer Turbolader nach einem der vorhergehenden Ansprüche, **gekennzeichnet durch** mindestens einen Anschlusskanal (24 bis 28), der mit dem Kühlkanal (19,39,55) und/oder dem Verbindungskanal (20 bis 23, 40 bis 49) **durch** die Anlage der Kühlplatte (2) an dem Bauteil kommunizierend in Verbindung steht und zu mindestens einer Kühlstelle des elektrischen Turboladers (1) führt.

6. Elektrischer Turbolader nach einem der vorhergehenden Ansprüche, **dadurch gekennzeichnet, dass** die Kühlstelle ein Element des Elektromotors (3) Ist.

7. Elektrischer Turbolader nach einem der vorhergehenden Ansprüche, dadurch gekenntzeichnet, dass derAnscnlusskanal (24 bis 28) zumindest abschnittsweise als Kühlspiralkanal (29,31) und/oder als Kühlraum (30) ausgebildet ist.

8. Elektrischer Turbolader nach einem der vorhergehenden Ansprüche, **dadurch gekennzeichnet, dass** ein Kühlmediumszulauf (18,50) auf einer Seite der Kühlplatte (2) und ein Kühlmediumsablauf (56) auf einer anderen Seite der Kühlplatte (2) ausgebildet ist.

## Claims

1. Electrical turbocharger (1) having a plurality of components (3, 6) and having an associated cooling device, wherein a power electronics sytem (6) and an electric motor (3) are provided as components (3, 6), **characterized in that** the cooling device has a cooling plate (2) which is arranged so as to rest between the power electronics device (6) and the electric motor (3) and which has cooling ducts (19, 39, 55), which are open in the manner of channels, for a cooling medium on opposite sides, wherein in each case at least one of the open cooling ducts (19, 39, 55) is closed by the cooling plate (2) bearing against the power electronics device (6) and the electric motor (3).

2. Electrical turbocharger according to Claim 1, **characterized in that** the cooling plate (2) has at least one connecting duct (20 to 23, 40 to 49) which issues into the cooling duct (19, 39, 55).

3. Electrical turbocharger according to either of the preceding claims, **characterized in that** the connecting duct (20 to 23, 40 to 49) is a connecting duct (20 to 23, 40 to 29) which passes through the cooling plate (2).

4. Electrical turbocharger according to one of the preceding claims, **characterized in that** the connecting duct (20 to 23, 40 to 49) is a bore which passes through the cooling plate (2).

5. Electrical turbocharger according to one of the preceding claims, **characterized by** at least one connection duct (24 to 28) which forms a communicating connection with the cooling duct (19, 39, 55) and/or the connecting duct (20 to 23, 40 to 49) by virtue of the cooling plate (2) bearing against the component, and leads to at least one cooling point of the electrical turbocharger (1).

6. Electrical turbocharger according to one of the preceding claims, **characterized in that** the cooling point is an element of the electric motor (3).

7. Electrical turbocharger according to one of the preceding claims, **characterized in that** the connection duct (24 to 28) is formed, at least in portions, as a helical cooling duct (29, 31) and/or as a cooling space (30).

8. Electrical turbocharger according to one of the preceding claims, **characterized in that** a cooling medium inlet (18, 50) is formed on one side of the cooling plate (2), and a cooling medium outlet (56) is formed on another side of the cooling plate (2).

## Revendications

1. Turbocompresseur électrique (1) doté de plusieurs composants (3, 6) et auquel est associé un dispositif de refroidissement, les composants (3, 6) prévus étant un système électronique de puissance (6) ainsi qu'un moteur électrique (3), **caractérisé en ce que** le dispositif de refroidissement comporte une plaque de refroidissement (2) disposée de façon à reposer respectivement entre le dispositif électronique de puissance (6) et le moteur électrique (3), ladite plaque possédant sur ses côtés opposés des canaux de refroidissement (19, 39, 55) ouverts de type rigoles conçus pour recevoir un agent de refroidissement, l'appui de la plaque de refroidissement (2) contre le dispositif électronique de puissance (6) et le moteur électrique (3) de respectivement au moins un des canaux de refroidissement (19, 39, 55) ouverts étant fermé.

2. Turbocompresseur électrique selon la revendication 1, **caractérisé en ce que** la plaque de refroidissement (2) comporte au moins un canal de jonction (20 à 23, 40 à 49) débouchant dans le canal de refroidissement (19, 39, 55).

3. Turbocompresseur électrique selon l'une quelconque des revendications précédentes, **caractérisé en ce que** le canal de jonction (20 à 23, 40 à 49) est un canal de jonction (20 à 23, 40 à 49) traversant la plaque de refroidissement (2).

4. Turbocompresseur électrique selon l'une quelconque des revendications précédentes, **caractérisé en ce que** le canal de jonction (20 à 23, 40 à 49) est un alésage traversant la plaque de refroidissement (2).

5. Turbocompresseur électrique selon l'une quelconque des revendications précédentes, **caractérisé par** la présence d'au moins un canal de raccordement (24 à 28) relié de façon à communiquer avec le canal de refroidissement (19, 39, 55) et/ou le canal de jonction (20 à 23, 40 à 49) en faisant reposer la plaque de refroidissement (2) contre le composant et conduisant à au moins un point de refroidissement du turbocompresseur électrique (1).

6. Turbocompresseur électrique selon l'une quelconque des revendications précédentes, **caractérisé en ce que** le point de refroidissement est un élément du moteur électrique (3).

7. Turbocompresseur électrique selon l'une quelconque des revendications précédentes, **caractérisé en ce que** le canal de raccordement (24 à 28) prend la forme au moins sur une de ses sections d'un canal à spirale de refroidissement (29, 31) et/ou d'une chambre de refroidissement (30).

8. Turbocompresseur électrique selon l'une quelconque des revendications précédentes, **caractérisé en ce qu'**une conduite d'amenée d'agent de refroidissement (18, 50) est réalisée sur un côté de la plaque de refroidissement (2) et qu'une conduite d'évacuation d'agent de refroidissement (56) est réalisée sur un autre côté de la plaque de refroidissement (2).
